# EUROPEAN PATENT SPECIFICATION

(11) **EP 2 727 117 B1**
(45) Date of publication and mention of the grant of the patent: **19.07.2017**
(21) Application number: 13809386.9
(22) Date of filing: 03.06.2013
(51) Int. Cl.: G21C 19/20, G21C 1/07

(54) **SYSTEM AND METHOD FOR PNEUMATICALLY LIFTING FUEL ELEMENTS OF PEBBLE-BED REACTOR GROUP BY GROUP**
VORRICHTUNG UND VERFAHREN ZUM GRUPPENWEISEN PNEUMATISCHEN ANHEBEN VON BRENNSTOFFELEMENTEN EINES KUGELHAUFENREAKTORS
SYSTÈME ET PROCÉDÉ DE LEVAGE PNEUMATIQUE D'ÉLÉMENTS DE COMBUSTIBLE D'UN RÉACTEUR À LIT DE BOULETS GROUPE PAR GROUPE

(30) Priority: 29.06.2012 CN 201210227180
(43) Date of publication of application: 07.05.2014
(73) Proprietor: Tsinghua University, Beijing 100084 (CN)
(72) Inventor: DU, Dong, Beijing 100084 (CN); SHEN, Peng, Beijing 100084 (CN); LIU, Hongbing, Beijing 100084 (CN); HAN, Zandong, Beijing 100084 (CN); ZOU, Yirong, Beijing 100084 (CN); HE, Ayada, Beijing 100084 (CN); ZHANG, Wenzeng, Beijing 100084 (CN); WANG, Li, Beijing 100084 (CN); PAN, Jiluan, Beijing 100084 (CN); ZHANG, Haiquan, Beijing 100084 (CN); WANG, Xin, Beijing 100084 (CN)
(74) Representative: m patent group
(86) International application number: PCT/CN2013/076666
(87) International publication number: WO 2014/000553

(56) References cited:
- CN-A- 1 042 620
- CN-A- 1 083 255
- CN-A- 101 083 153
- CN-A- 101 702 330
- CN-A- 101 853 708
- CN-A- 102 097 144
- CN-A- 102 262 907
- CN-A- 102 750 996
- JP-A- H07 113 887
- JP-A- 2003 222 693
- JP-A- 2003 222 693
- JP-A- 2004 354 071

## Description

### FIELD

The present disclosure generally relates to a field of pebble-bed reactor, more particularly, to system and method for pneumatically lifting fuel elements of pebble-bed reactor group by group.

### BACKGROUND

A modular pebble-bed high-temperature gas-cooled reactor is a fourth generation nuclear reactor which is being researched and acknowledged as the safest nuclear reactor. This reactor can achieve cycling of fuel elements with pebble shape passing through a reactor core time after time by using pneumatically lifting. A fuel cycling capability (namely a maximum amount of the fuel elements passing through the reactor core in a unit time) is a significant index of the reactor. The fuel cycling capability is higher, the distribution of power density of the reactor core is more uniform, such that an adjusting reliability and an average burnup of the reactor core are enhanced. The pneumatically lifting of the fuels is a key step of the fuel cycle of the pebble-bad reactor, in which the fuels after a burnup detecting are lifted perpendicularly from a position below the reactor core to a top of the reactor core by a pushing force of gas flow, pass through a pressure casing, then return to the peddle-bed. On the one hand, an amount of the fuel elements lifted to the reactor core in the unit time by the pneumatically lifting (i.e. lifting capability) is a factor restricting the cycling capability of the fuel elements, and affects the possibility of the reactor to achieve a rapid cycling of the fuel elements. On the other hand, because a lifting pipeline is connected to the top of the reactor core, an impact against to the reactor core and a damage rate of the fuel elements are depended on a running speed of the fuel elements, which is related directly to a safety of the reactor.

The established experimental pebble-bed reactors adopt a method of pneumatically lifting the fuel element one by one, in which one fuel element is entered into the lifting pipeline, and the next fuel element will be pushed into the lifting pipeline until the one fuel element has been lifted to the reactor core. Therefore, the delivery rate of the fuel element is low and the lifting capability can not be adjusted according to different working conditions, thus restricting an accuracy and a running economy of the reactor. Moreover, a plurality of lifting pipelines must be disposed in order to satisfy the fuel cycling capability, thus increasing costs and complicating the structure.

CN 101083153A relates to a sphere-bed high-temperature gas-cooled online refueling system, which belongs to the reactor engineering technology area. The states system includes four function subsystem that new fuel loading system, reactor core fuel cycle main system, spent fuel removing system, reactor core evacuation and re-loading system; which is composed of the charging hole, the cross ball counter, the isolation ball valve, the emptying chute, the dumping device, the broken spherical tank, the divider and so on. The end of the charging hole connects the across ball counter, the end of the cross ball counter connects the isolation ball valve, the end of isolation ball valve connects the divider. The end of the divider divides into two ways, each way connects a suit of the isolation ball valve. The invention saves the cost; guarantees the integrality of the fuel component in the entire reactor core loading process; enhances the fuel simplification and the broken ball separation speed and the reliability, saves the cabin space; effectively controls the transportation of the fuel element in system pipeline.

JP 2003222693A provides a pebble bed reactor, reactor facilities provided with the same, and a method for operating the reactor capable of smoothing its output in the diametral directions of the reactor core and improving cost effectiveness. The reactor facilities are provided with both a burn-up detector for introducing a large number of fuel balls discharged from the pebble bed reactor core and detecting the burn-up of the fuel balls and a process computer for controlling a fuel thrower and a selector in such a way as to divide the fuel balls of relatively small burn-up to a region relatively outside in the diametral directions via an outside throwing pipe and the fuel balls of relatively large burn-up to a region relatively inside in the diametral directions via an inside throwing pipe when rethrowing the fuel balls to the reactor core according to the results of detection by the burn-up detector.

CN 1083255A discloses a fuel balls delivering equipment for fuel elements loading system in high temp., gas cooled nuclear reactor, which uses cooling gas of reactor as working medium. Under suction effect, gas flows through a narrow channel between sucked fuel ball and fuel ball delivering pipeline mouth to form a pressure difference between the front and back of ball, so that the fuel ball is lifted up with gas stream. Its advantages are simple structure, reliable running, convenient maintenance, and high delivery efficiency.

### SUMMARY

Embodiments of the present disclosure seek to solve at least one of the problems existing in the prior art at least to some extent.

Embodiments of the present disclosure provide a system and a method for pneumatically lifting fuel elements of a pebble-bed reactor group by group. With the system and method, the fuel elements can be grouped and a group of fuel elements can be pneumatically lifted into a reactor core each time, and an amount of the fuel elements in each group and a space between the adjacent fuel elements in each group are controllable. Therefore, the lifting capability and the delivery efficiency can be optimized and improved, and the power consumption can be reduced. Moreover, only one lifting pipeline is needed, thus simplifying the structure of the system and reducing costs.

According to the invention, a system for pneumatically lifting fuel elements of a pebble-bed reactor group by group, comprises: a feeder having one outlet and at least two inlets; at least two burnup detection assemblies, each of the burnup detection assembly comprising one burnup detector and one buffer pipeline having a first end connected to an outlet of the one burnup detector and a second end connected to one of at least two inlets of the feeder, an amount of the inlets of the feeder being identical with that of the burnup detection assemblies; a gas power supply comprising a high pressure chamber and a low pressure chamber; a tee joint disposed at the outlet of the feeder and having two inlets connected to the outlet of the feeder and the high pressure chamber respectively and an outlet; a lifting pipeline having an inlet connected to the outlet of the tee joint and an outlet higher than the inlet of the lifting pipeline, a ratio D2/D1 of a diameter D2 of each fuel element to an inner diameter D1 of the lifting pipeline being in a range of 0.50-0.99; a gas diverter disposed at the outlet of the lifting pipeline and having an inlet connected to the outlet of the lifting pipeline, an outlet and a gas discharge port connected to the low pressure chamber; and a reactor feeding pipeline having an inlet connected to the outlet of the gas diverter.

The feeder comprises a case having at least two feeding pipes connected correspondingly to the buffer pipelines of the burnup detection assemblies and a discharging pipe, central axes of the discharge pipe and the feeding pipes being at an angle of at least 5° with a horizontal plane; a rotating shaft ; a rotating disc fixed onto the rotating shaft and formed with at least one fuel element discharging groove in a periphery thereof , central axes of the feeding pipes, the discharging pipe and the fuel element discharging groove being located in the same plane perpendicular to a central axis of the rotating shaft; and a driving device fixed onto the case and connected to the rotating shaft to drive the rotating shaft to rotate.

According to the invention, the feeder is configured such that the at least two fuel elements form a fuel element queue within the lifting pipeline.

In some embodiments, the driving device comprises a motor, a reducer and a coupler, an output shaft of the motor is connected to an input shaft of the reducer, and an output shaft of the reducer is connected to the rotating shaft of the feeder via the coupler.

In some embodiments, the system further comprising: a plurality of counters disposed at one or more of the buffer pipeline, the inlets and outlet of the feeder, the inlet and outlet of the lifting pipeline, and the reactor feeding pipeline.

In some embodiments, the gas power supply is a gas compressor.

Embodiments of the present disclosure provide a method of pneumatically lifting fuel elements of a pebble-bed reactor group by group by using the system as set forth in any one of above mentioned embodiments, comprising steps of:
1) entering fuel elements into the brunup detectors of burnup detection assemblies via inlets of the burnup detectors for burnup detecting respectively, and then entering the fuel elements into buffer pipelines connected to the burnup detectors via outlets of the burnup detectors correspondingly;
2) entering fuel elements into inlets of a feeder or a feeding pipe, discharging one fuel element via the outlet of the feeder at a predetermined time interval T, stopping discharging of the fuel element until at least two fuel elements are discharged such that the at least two fuel elements form a fuel element queue within the lifting pipeline, driving the fuel element queues to the gas diverter by an gas flow generated from the high pressure chamber, returning the gas flow to the low pressure chamber from the gas diverter, and entering the fuel elements into a reactor core via the reactor feeding pipeline under gravity or inertia after passing through the gas diverter, in which the predetermined time interval T is in a range of 0 to L/V, where L is a length of the lifting pipeline and V is a travelling rate of each fuel element within the lifting pipeline; and
3) repeating step 2) so as to pneumatically lift the fuel elements of the pebble-bed reactor group by group.

The system and method of the embodiment of the present disclosure can pneumatically lift fuel elements of a pebble-bed reactor group by group. That is, the system and method can pneumatically lift a group of fuel elements each time. The amount of the fuel elements and space between the adjacent fuel elements in each group are controllable. The lifting capability and the delivery efficiency can be optimized and improved. The power consumption can be reduced. Moreover, only one lifting pipeline is needed, thus simplifying the structure of the system, reducing costs of manufacturing, maintaining and using, and it is adaptable to build and run the peddle-bed reactor.

### BRIEF DESCRIPTION OF THE DRAWINGS

Fig.1 is a schematic view of a system for pneumatically lifting fuel elements of a pebble-bed reactor group by group according to an embodiment of the present disclosure, in which the arrows indicate a flowing direction of a gas flow;
Fig.2 is a schematic view of a feeder of the system for pneumatically lifting fuel elements of a pebble-bed reactor group by group according to an embodiment of the present disclosure;
Fig.3 is a sectional view taken along A-A in Fig.2, in which the broken lines show a distribution state of the fuel elements in the feeder when a rotating disc is rotating in the anti-clock direction);
Fig.4 is a schematic view of a gas diverter of the system for pneumatically lifting fuel elements of a pebble-bed reactor group by group according to an embodiment of the present disclosure, in which the arrows indicate a flowing direction of a gas flow, and the broken lines show a distribution sate of the fuel elements in the gas diverter;
Fig.5 is a schematic view of a counter of the system for pneumatically lifting fuel elements of a pebble-bed reactor group by group according to an embodiment of the present disclosure;
Fig.6 is a graph view showing a relationship between a lifting capability and a flow velocity of a gas flow; and
Fig 7 is a graph view showing a relationship between a total pressure drop of the system and the lifting capability.

### Reference signs:

1 burnup detector; 2 buffer pipeline; 3 fuel element; 4 feeder; 5 gas inflowing pipeline; 6 tee joint; 7 counter; 8 lifting pipeline; 9 gas diverter; 10 gas outflowing pipeline; 11 reactor feeding pipeline; 12 pressure container; 13 reactor core; 21 motor; 22 reducer; 23 coupler; 24 rotating shaft; 25 top cover; 26 rotating disc; 27 case; 28 bearing; 29 flat key ; 261fuel element discharging groove; 271 feeding pipe; 272 discharging pipe; 31 inlet flange; 32 fuel element delivery pipe; 33 gas collection sleeve; 34 gas discharge pipe; 35 discharge port flange; 36 gas leading hole; 37 outlet flange; 41 pipeline; 42 control module; 43 current coil; 44 protection sleeve.

### DETAILED DESCRIPTION

Referring to the drawings, embodiments of the present disclosure will be described by way of example only.

Unless specified or limited otherwise, the terms "mounted," "connected," "supported," and "coupled" and variations thereof are used broadly and encompass both direct and indirect mountings, connections, supports, and couplers. Further, "connected" and "coupled" are not restricted to physical or mechanical connections or couplers.

Also, it is to be understood that phraseology and terminology used herein with reference to device or element orientation (such as, for example, terms like "central," "upper," "lower," "front," "rear," and the like) are only used to simplify description of the present invention, and do not alone indicate or imply that the device or element referred to must have a particular orientation. In addition, terms such as "first" and "second" are used herein for purposes of description and are not intended to indicate or imply relative importance or significance.

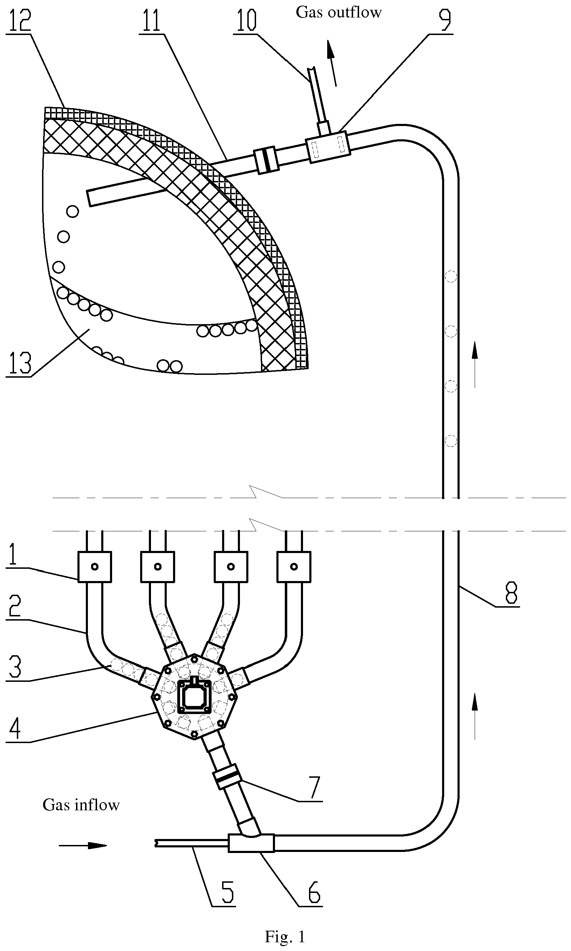

The system and method for pneumatically lifting fuel elements of a pebble-bed reactor group by group according to embodiments of the present disclosure will be described below with reference to Figs. 1 to 7.

Fig.1 is a schematic view of a system for pneumatically lifting fuel elements of a pebble-bed reactor group by group according to an embodiment of the present disclosure.

Here, the phase "group by group" means that the fuel elements can be grouped, the system can pneumatically lift at least one group of fuel elements simultaneously each time, and the amount of the fuel elements in one group can be adjusted.

The system for pneumatically lifting fuel elements of a pebble-bed reactor group by group comprises a feeder 4, a lifting pipeline 8, a reactor feeding pipeline 11, a tee joint 6, a gas diverter 9, a gas power supply and four bumup detection assemblies.

The feeder 4 has one outlet and a plurality of inlets, in which the amount of the inlets of the feeder 4 is identical with that of the burnup detection assemblies. Each of the burnup detection assembly comprises one brunup detector 1 and one buffer pipeline 2 having a first end connected to an outlet of the one burnup detector 1 and a second end connected to one of the inlets of the feeder 4.

The gas power supply comprises a high pressure chamber and a low pressure chamber. The tee joint 6 is disposed at the outlet of the feeder 4 and has two inlets connected to the outlet of the feeder 4 and the high pressure chamber respectively and an outlet. The lifting pipeline 8 has an inlet connected to the outlet of the tee joint 6 and an outlet which is higher than the inlet of the lifting pipeline 8 in level.

The gas diverter 9 is disposed at the outlet of the lifting pipeline 8 and has an inlet connected to the outlet of the lifting pipeline 8, an outlet and a gas discharge port connected to the low pressure chamber.

The reactor feeding pipeline 11 has an inlet connected to the outlet of the gas diverter 9. A ratio of a diameter D2 of each fuel element to an inner diameter D1 of the lifting pipeline 8 is about 0.5 to about 0.99, preferably 0.92. The reactor feeding pipeline 11 passes through a pressure container 12 and is connected to the reactor core 13. A gas inflowing pipeline 5 is connected between the high pressure chamber and one inlet of the tee joint 6. A gas outflowing pipeline 10 may be connected between the low pressure chamber of the gas power supply and the gas discharge port of the gas diverter 9.

In some embodiments, the feeder 4 may comprise a driving device, a rotating shaft 24, a rotating disc 26 and a case 27. Four feeding pipes 271 connected correspondingly to the buffer pipelines 2 of the burnup detection assemblies and a discharging pipe 272 are disposed on the case 27. The rotating shaft 24 is fixed onto the rotating disc 26, and the driving device is fixed onto the case 27 and connected to the rotating shaft 24 so as to rotate the rotating shaft 24. By way of example and without limitation, the rotating disc 26 is formed with eight fuel element discharging grooves 261 in the periphery thereof. Central axes of the feeding pipes 271, the discharging pipe 272 and the fuel element discharging groove 261 are located in the same plane perpendicular to a central axis of the rotating shaft 24, and the central axes of the discharge pipe 272 and the feeding pipes 271 are at an angle of at least 5 degrees relative to the horizontal plane.

In some embodiments, the driving device may comprise a motor 21, a reducer 22 and a coupler 23. An output shaft of the motor 21 is connected to an input shaft of the reducer 22, and an output shaft of the reducer 22 is connected to the rotating shaft 24 of the feeder 4 via the coupler 23.

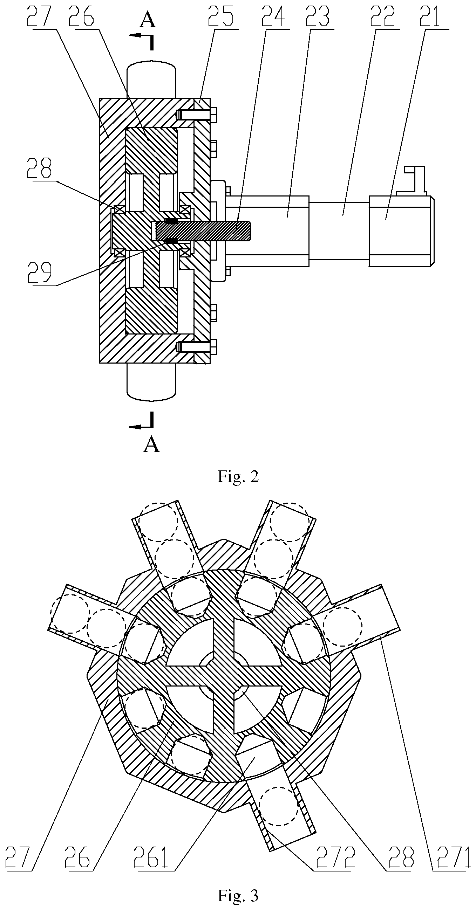

Fig.2 is a schematic view of a feeder of the system according to embodiments of the present disclosure, and Fig.3 is a sectional view taken along A-A in Fig.2.

The case 27 is connected to four buffer pipelines 2 of the burnup detection assemblies via the four feeding pipes 271, and connected to the lifting pipeline 8 via the discharging pipe 272. The eight fuel element discharging grooves 261 may be evenly distributed around the circumferential direction of the rotating disc 26, and each of fuel element discharging grooves 261 may hold one fuel element. The broken lines in the Fig. 3 show the distribution state of the fuel elements in the feeder 4 when the rotating disc 26 is rotated in the anti-clock direction, the fuel elements enter into the fuel element discharging grooves 261 from the feeding pipes 271 by the gravity thereof. Along with the rotation of the rotating disc 26, the fuel elements enter into the lifting pipeline 8 by the gravity thereof when the central axes of the discharge pipe 272 and the central axes of the fuel element discharging grooves 261 are coincided with each other. A rotation speed of the rotating disc 26 may be controlled by the motor 21, so as to control a time interval of the fuel elements entering into the lifting pipeline 8, and thereby to adjust a space between the adjacent fuel elements in the fuel element queue in the lifting pipeline 8.

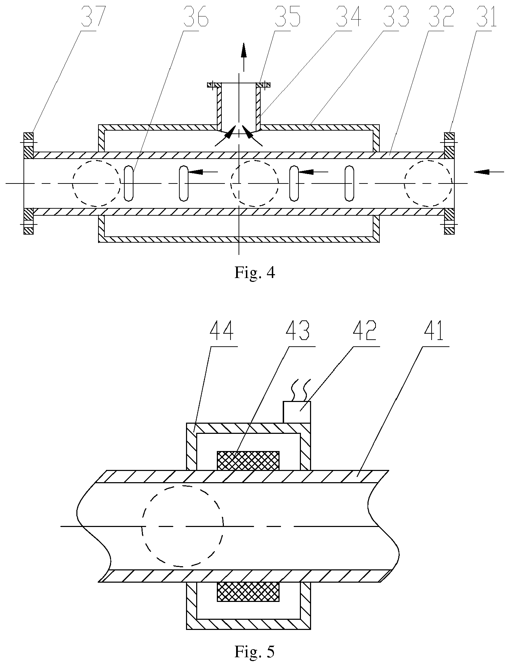

Fig.4 is a schematic view of a gas diverter of the system. A gas collection sleeve 33 is welded to an outside of a fuel element delivery pipe 32, and an inner diameter of the fuel element delivery pipe 32 is larger than an outer diameter of the fuel element. A plurality of gas leading holes 36 are formed in a side wall of the fuel element delivery pipe 32. The fuel element queue passes through the fuel element delivery pipe 32, simultaneously, the gas for pneumatically lifting flows into the gas collection sleeve 33 via the gas leading holes 36, then flows into the gas outflowing pipeline 10 via a gas discharge pipe 34 of the gas collection sleeve 33.

In some embodiments, the system may further comprise a plurality of counters 7, for example, tow counters 7, the counters 7 are disposed at the reactor feeding pipeline 11 and the outlet of the feeder 4, and used to record amounts of the fuel elements entering into and leaving from the lifting pipeline 8, respectively.

Fig.5 shows a schematic view of the counter of the system, in which the working principle of the counter is illustrated. The working principle of the counters 7 is that an additional magnetic field generated by passing of the fuel element through the current coil 43 changes the original magnetic field, so that a corresponding voltage signal is generated and then the voltage signal is collected and used to count by the control module 42.

In some embodiments, the gas power supply may be a gas compressor.

A method of pneumatically lifting fuel elements of the pebble-bed reactor group by group by using the system of above mentioned embodiments comprises the following steps:
Step 1, entering the fuel elements into the brunup detectors 1 of the burnup detection assemblies via the inlets of the burnup detectors for burnup detecting respectively, and then entering the fuel elements into the buffer pipelines 2 connected to the burnup detectors 4 via the outlets of the burnup detectors correspondingly.
Step 2, entering fuel elements into the inlets of the feeder 4 or the feeding pipe 271, presetting predetermined time interval T as two seconds, discharging one fuel element via the outlet of the feeder at the predetermined time interval T, and then stopping discharging of the fuel element until at least two, three or four fuel elements are discharged such that the at least two, three or four fuel elements may form a fuel element queue within the lifting pipeline 8. Driving the fuel element queues to the gas diverter 9 by an gas flow generated from the high pressure chamber, returning the gas flow to the low pressure chamber from the gas diverter 9.Entering the fuel elements into a reactor core via the reactor feeding pipeline 8 under gravity or inertia after the fuel elements passing through the gas diverter 9.
Step 3, repeating the step 2 so as to pneumatically lift the fuel elements of the pebble-bed reactor group by group.

In some embodiments, the main parameters of the system and method are as following: the flow velocity of the gas flow for pneumatically lifting may be about 0.7m/s to about 7m/s, the diameter of the fuel element may be about 60 mm, the inner diameter of the lifting pipeline 8 may be about 65 mm and a length of the lifting pipeline 8 may be about 60 m, the amount *i* of the fuel elements in one group may be 2, 3 or 4. However, here "i =1" means that only one fuel element is in each group, in other words, a single fuel element is lifted every time as performed as the peddle-bed reactors in prior art do.

According to the embodiments of the present disclosure, the working principle and advantages of the system and method will be described below.

The diameter of the fuel element is very close to the inner diameter of the lifting pipeline 8, so that a larger pressure difference is generated when the gas flow passes through a long and narrow gap formed between the fuel element and the inner wall of the lifting pipeline 8, thus driving the fuel elements travelling within the lifting pipeline 8. With the method of pneumatically lifting fuel elements of the pebble-bed reactor group by group, a plurality of fuel elements (i.e. a group of fuel elements) are pneumatically lifted at the same time, so that the lifting capability for lifting the fuel elements may be greatly increased without increasing the gas flowing speed, thus increasing the delivery efficiency of the fuel elements. Moreover, when the working condition is changed, the lifting capability for lifting the fuel elements may be optimized by adjusting the amount of the fuel elements in each group.

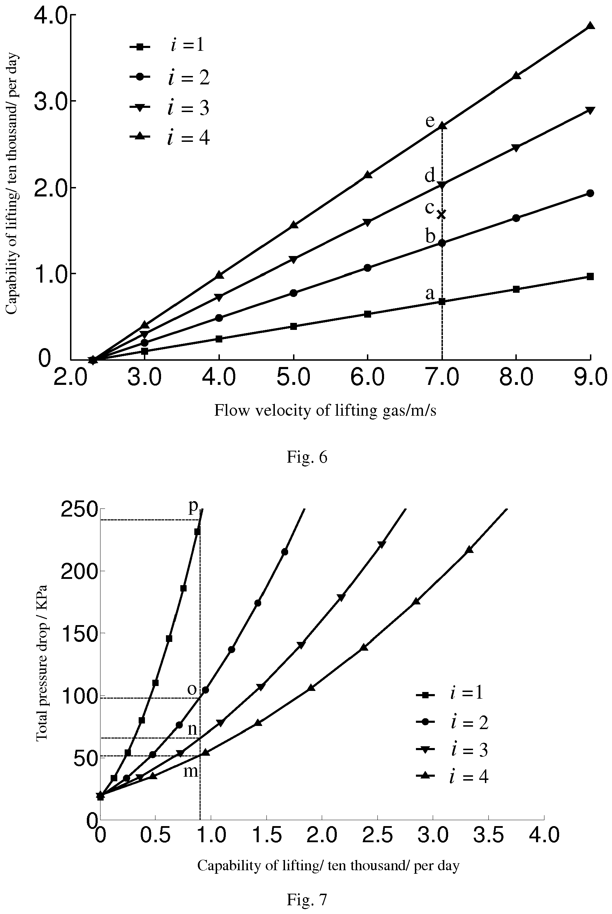

Fig.6 is a graph view showing a relationship between the lifting capability and the flow velocity of the gas flow. If the lifting capability for lifting the fuel elements shall be increased to Point c from Point *a* due to the changing of the working condition, the conventional experimental system of the pebble-bed reactors pneumatically lifting a single fuel element each time is hardly to achieve the lifting capability, because the gas flowing speed should be too high and will go beyond a limit of the gas power supply in order to achieve the lifting capability. However, the method of pneumatically lifting fuel elements group by group can rapidly achieve this great increasing of the lifting capability, and the system of the embodiment of the present disclosure may operate between Point d or e and Point a or b in a time-segmented manner. For instance, the system may operate between Point e and b in the time-segmented manner, the flow velocity of the gas flow for pneumatically lifting may be kept to be constant, and within a time period Tₑ of a unit time (one day), the feeder 4 is adjusted to allow a queue formed by four fuel elements to be pneumatically lifted into the reactor core. However, in the rest time period T_{b}, the feeder 4 is adjusted to allow a queue formed by two fuel elements to be pneumatically lifted into the reactor core. A ratio of Tₑ to T_{b} is equal to that of a length of a line section cb to a length of a line section ce.

Fig 7 is a graph view showing a relationship between a total pressure drop of the system and the lifting capability. As shown in the Fig.7, with the same lifting capabilities, the technology of pneumatically lifting the fuel elements group by group can dramatically reduce the total pressure drop of the system and has a high delivery efficiency, by comparing to the technology of pneumatically lifting a single fuel element each time. In addition, the advantages of the pneumatically lifting the fuel elements group by group may become more considerable along with the amount *i* of the grouped fuel elements increasing.

Reference throughout this specification to "an embodiment," "some embodiments," "one embodiment", "another example," "an example," "a specific examples," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example, "in an example," "in a specific examples," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments can not be construed to limit the present disclosure. The scope of the invention is defined in the appended claims.

## Claims

1. A system for pneumatically lifting fuel elements of pebble-bed reactor group by group, comprising:
a feeder (4) having one outlet and at least two inlets;
at least two burnup detection assemblies, each of the burnup detection assembly comprising one burnup detector (1) and one buffer pipeline (2) having a first end connected to an outlet of the one burnup detector (1) and a second end connected to one of at least two inlets of the feeder (4), an amount of the inlets of the feeder (4) being identical with that of the burnup detection assemblies;
a gas power supply comprising a high pressure chamber and a low pressure chamber;
a tee joint (6) disposed at the outlet of the feeder (4) and having two inlets connected to the outlet of the feeder (4) and the high pressure chamber respectively and an outlet;
a lifting pipeline (8) having an inlet connected to the outlet of the tee joint (6) and an outlet higher than the inlet of the lifting pipeline (8), a ratio D2/D1 of a diameter D2 of each fuel element to an inner diameter D1 of the lifting pipeline (8) being in a range of 0.50-0.99;
a gas diverter (9) disposed at the outlet of the lifting pipeline (8) and having an inlet connected to the outlet of the lifting pipeline (8), an outlet and a gas discharge port connected to the low pressure chamber; and
a reactor feeding pipeline (11) having an inlet connected to the outlet of the gas diverter (9),
**characterized in that** the feeder (4) comprises:
a case (27) having at least two feeding pipes (271) connected correspondingly to the buffer pipelines (2) of the burnup detection assemblies and a discharging pipe (272), central axes of the discharge pipe (272) and the feeding pipes (271) being at an angle of at least 5° with a horizontal plane;
a rotating shaft (24);
a rotating disc (26) fixed onto the rotating shaft (24) and formed with at least one fuel element discharging groove (261) in a periphery thereof, central axes of the feeding pipes, the discharging pipe and the fuel element discharging groove being located in the same plane perpendicular to a central axis of the rotating shaft; and
a driving device fixed onto the case (27) and connected to the rotating shaft (24) to drive the rotating shaft (24) to rotate,
wherein the feeder (4) is configured such that the at least two fuel elements form a fuel element queue within the lifting pipeline (8).

2. The system as set forth in claim 1, wherein the driving device comprises a motor (21), a reducer (22) and a coupler (23), an output shaft of the motor (21) is connected to an input shaft of the reducer (22), and an output shaft of the reducer (22) is connected to the rotating shaft (24) of the feeder (4) via the coupler.

3. The system as set forth in claim 1 or 2, further comprising:
a plurality of counters disposed at one or more of the buffer pipeline (2), the inlets and outlet of the feeder (4), the inlet and outlet of the lifting pipeline (8), and the reactor feeding pipeline (11).

4. The system as set forth in any one of claims 1-3, wherein the gas power supply is a gas compressor.

5. A method of pneumatically lifting fuel elements of a pebble-bed reactor group by group by using the system as set forth in any one of claims 1-4, comprising steps of:
1) entering fuel elements into the burnup detectors of burnup detection assemblies via inlets of the burnup detectors for burnup detecting respectively, and then entering the fuel elements into buffer pipelines connected to the burnup detectors via outlets of the burnup detectors correspondingly;
2) entering fuel elements into inlets of a feeder or a feeding pipe, discharging one fuel element via the outlet of the feeder at a predetermined time interval T, stopping discharging of the fuel element until at least two fuel elements are discharged such that the at least two fuel elements form a fuel element queue within the lifting pipeline, driving the fuel element queues to the gas diverter by an gas flow generated from the high pressure chamber, returning the gas flow to the low pressure chamber from the gas diverter, and entering the fuel elements into a reactor core via the reactor feeding pipeline under gravity or inertia after passing through the gas diverter, in which the predetermined time interval T is in a range of 0 to L/V, where L is a length of the lifting pipeline and V is a travelling rate of each fuel element within the lifting pipeline; and
3) repeating step 2) so as to pneumatically lift the fuel elements of the pebble-bed reactor group by group.

## Patentansprüche

1. System zum pneumatischen Heben von Brennelementen eines Kugelhaufenreaktors in Gruppen, das Folgendes enthält:
eine Zuführungsvorrichtung (4), die einen Auslass und mindestens zwei Einlässe besitzt;
mindestens zwei Abbranddetektionsanordnungen, wobei jede Abbranddetektionsvorrichtung einen Abbranddetektor (1) und eine Pufferleitung (2), die ein erstes Ende, das mit einem Auslass des einen Abbranddetektors (1) verbunden ist, und ein zweites Ende, das mit einem von mindestens zwei Einlässen der Zuführungsvorrichtung (4) verbunden ist, besitzt, enthält, wobei eine Menge der Einlässe der Zuführungsvorrichtung (4) mit der Menge der Abbranddetektionsanordnungen übereinstimmt;
eine Gasleistungsversorgung, die eine Hochdruckkammer und eine Niederdruckkammer enthält;
eine T-Verbindung (6), die bei dem Auslass der Zuführungsvorrichtung (4) angeordnet ist und zwei Einlässe, die mit dem Auslass der Zuführungsvorrichtung (4) bzw. mit der Hochdruckkammer verbunden sind, und einen Auslass besitzt;
eine Hebeleitung (8), die einen Einlass, der mit dem Auslass der T-Verbindung (6) verbunden ist, und einen Auslass, der höher als der Einlass der Hebeleitung (8) liegt, besitzt, wobei ein Verhältnis D2/D1 eines Durchmessers D2 jedes Brennelements zu einem inneren Durchmesser D1 der Hebeleitung (8) in einem Bereich von 0,50-0,99 liegt;
ein Gasablenkelement (9), das bei dem Auslass der Hebeleitung (8) angeordnet ist und einen Einlass, der mit dem Auslass der Hebeleitung (8) verbunden ist, einen Auslass und einen Gasablassanschluss, der mit der Niederdruckkammer verbunden ist, besitzt; und
eine Reaktorzuführungsleitung (11), die einen Einlass, der mit dem Auslass des Gasablenkelements (9) verbunden ist, besitzt,
**dadurch gekennzeichnet, dass** die Zuführungsvorrichtung (4) Folgendes enthält:
ein Gehäuse (27), das mindestens zwei Zuführungsrohre (271), die mit den Pufferleitungen (2) der Abbranddetektionsanordnungen entsprechend verbunden sind, und ein Ablassrohr (272) besitzt, wobei zentrale Achsen des Ablassrohrs (272) und der Zuführungsrohre (271) unter einem Winkel von mindestens 5° zu einer horizontalen Ebene liegen;
eine Drehwelle (24);
eine Drehscheibe (26), die an der Drehwelle (24) fixiert ist und mit mindestens einer Brennelementablassrille (261) in ihrem Umfang gebildet ist, wobei sich zentrale Achsen der Zuführungsrohre, des Ablassrohrs und der Brennelementablassrille in der gleichen Ebene senkrecht zu einer zentralen Achse der Drehwelle befinden; und
eine Antriebsvorrichtung, die an dem Gehäuse (27) fixiert ist und mit der Drehwelle (24) verbunden ist, um die Drehwelle (24) anzutreiben, damit sie sich dreht,
wobei die Zuführungsvorrichtung (4) so konfiguriert ist, dass die mindestens zwei Brennelemente eine Brennelementwarteschlange innerhalb der Hebeleitung (8) bilden.

2. System nach Anspruch 1, wobei die Antriebsvorrichtung einen Motor (21), ein Untersetzungsgetriebe (22) und ein Verbindungselement (23) enthält, eine Ausgangswelle des Motors (21) mit einer Eingangswelle des Untersetzungsgetriebes (22) verbunden ist und eine Ausgangwelle des Untersetzungsgetriebes (22) über das Verbindungselement mit der Drehwelle (24) der Zuführungsvorrichtung (4) verbunden ist.

3. System nach Anspruch 1 oder 2, das ferner Folgendes enthält:
mehrere Zähler, die bei einer oder mehreren Pufferleitungen (2), den Einlässen und Auslässen der Zuführungsvorrichtung (4), dem Einlass und dem Auslass der Hebeleitung (8) und der Reaktorzuführungsleitung (11) angeordnet sind.

4. System nach einem der Ansprüche 1-3, wobei die Gasleistungsversorgung ein Gasverdichter ist.

5. Verfahren zum pneumatischen Heben von Brennelementen eines Kugelhaufenreaktors in Gruppen unter Verwendung des Systems nach einem der Ansprüche 1-4, das die folgenden Schritte umfasst:
1) jeweils Einsetzen von Brennelementen in die Abbranddetektoren der Abbranddetektionsvorrichtungen über Einlässe der Abbranddetektoren zum Detektieren von Abbrand und dann entsprechendes Einsetzen der Brennelemente in Pufferleitungen, die über Auslässe der Abbranddetektoren mit den Abbranddetektoren verbunden sind;
2) Einsetzen von Brennelementen in Einlässe einer Zuführungsvorrichtung oder eines Zuführungsrohrs, Ablassen eines Brennelements über den Auslass des Zuführungselements während eines vorgegebenen Zeitraums T, Anhalten des Ablassens des Brennelements, bis mindestens zwei Brennelemente so abgelassen worden sind, dass die mindestens zwei Brennelemente eine Brennelementwarteschlange innerhalb der Hebeleitung bilden, Antreiben der Brennelementwarteschlange zu dem Gasablenkelement durch einen Gasstrom, der von der Hochdruckkammer erzeugt wird, Zurückführen des Gasstroms zu der Niederdruckkammer von dem Gasablenkelement und Einsetzen der Brennelemente in einen Reaktorkern über die Reaktorzuführungsleitung unter dem Einfluss der Schwerkraft oder Trägheit, nachdem sie sich durch das Gasablenkelement bewegt haben, wobei der vorgegebene Zeitraum T in einem Bereich von 0 bis L/V liegt, wobei L eine Länge der Hebeleitung und V eine Fortbewegungsgeschwindigkeit jedes Brennelements innerhalb der Hebeleitung ist; und
3) Wiederholen von Schritt 2), um die Brennelemente des Kugelhaufenreaktors in Gruppen pneumatisch zu heben.

## Revendications

1. Système destiné à faire monter pneumatiquement, par groupe, des éléments combustibles d'un groupe de réacteurs à lit de boulets, comportant :
un dispositif d'alimentation (4) ayant une sortie et au moins deux entrées ;
au moins deux ensembles de détection de combustion nucléaire, chacun des ensembles de détection de combustion nucléaire comportant un détecteur de combustion nucléaire (1) et une canalisation tampon (2) ayant une première extrémité raccordée à une sortie du premier détecteur de combustion nucléaire (1) et une seconde extrémité raccordée à l'une d'au moins deux entrées du dispositif d'alimentation (4), un nombre des entrées du dispositif d'alimentation (4) étant identique à celui des ensembles de détection de combustion nucléaire ;
une alimentation en gaz comportant une chambre à haute pression et une chambre à basse pression ;
une dérivation en T (6) disposée à la sortie du dispositif d'alimentation (4) et ayant deux entrées raccordées à la sortie du dispositif d'alimentation (4) et à la chambre à haute pression respectivement, et une sortie ;
une canalisation de montée (8) ayant une entrée raccordée à la sortie de la dérivation en T (6) et une sortie plus haute que l'entrée de la canalisation de montée (8), un rapport D2/D1 d'un diamètre D2 de chaque élément combustible sur un diamètre intérieur D1 de la canalisation de montée (8) étant dans une plage de 0,50 à 0,99 ;
un organe de déviation de gaz (9) disposé à la sortie de la canalisation de montée (8) et ayant une entrée raccordée à la sortie de la canalisation de montée (8), une sortie et un orifice d'évacuation de gaz raccordés à la chambre à basse pression ; et
une canalisation d'alimentation de réacteur (11) ayant une entrée raccordée à la sortie de l'organe de déviation de gaz (9),
**caractérisé en ce que** le dispositif d'alimentation (4) comporte :
un carter (27) ayant au moins deux tubes d'alimentation (271) raccordés de manière correspondante aux canalisations tampon (2) des ensembles de détection de combustion nucléaire et un tube d'évacuation (272), les axes centraux du tube d'évacuation (272) et des tubes d'alimentation (271) étant à un angle d'au moins 5° par rapport à un plan horizontal ;
un arbre tournant (24) ;
un disque rotatif (26) fixé sur l'arbre rotatif (24) et formé avec au moins une gorge d'évacuation d'élément combustibles (261) dans une périphérie de celui-ci, les axes centraux des tubes d'alimentation, du tube d'évacuation et de la gorge d'évacuation d'élément combustible étant situés dans le même plan perpendiculaire à un axe central de l'arbre tournant ; et
un dispositif d'entraînement fixé sur le carter (27) et raccordé à l'arbre tournant (24) pour entraîner l'arbre tournant (24) afin de le faire tourner,
dans lequel le dispositif d'alimentation (4) est configuré de telle sorte que les au moins deux éléments combustibles forment une file d'attente d'éléments combustibles à l'intérieur de la canalisation de montée (8).

2. Système selon la revendication 1, dans lequel le dispositif d'entraînement comporte un moteur (21), un réducteur (22) et un coupleur (23), un arbre de sortie du moteur (21) est raccordé à un arbre d'entrée du réducteur (22), et un arbre de sortie du réducteur (22) est raccordé à l'arbre tournant (24) du dispositif d'alimentation (4) via le coupleur.

3. Système selon la revendication 1 ou 2, comportant en outre :
une pluralité de compteurs disposés sur un ou plusieurs éléments parmi la canalisation tampon (2), les entrées et la sortie du dispositif d'alimentation (4), l'entrée et la sortie de la canalisation de montée (8), et la canalisation d'alimentation de réacteur (11).

4. Système selon l'une quelconque des revendications 1 à 3, dans lequel l'alimentation en gaz est un compresseur à gaz.

5. Procédé pour faire monter pneumatiquement, par groupe, des éléments combustibles d'un groupe de réacteurs à lit de boulets en utilisant le système selon l'une quelconque des revendications 1 à 4, comportant les étapes consistant à :
1) faire entrer des éléments combustibles dans les détecteurs de combustion nucléaire d'ensembles de détection de de combustion nucléaire via des entrées des détecteurs de combustion nucléaire pour détecter une combustion nucléaire respectivement, et ensuite faire entrer les éléments combustibles dans des canalisations tampon raccordées aux détecteurs de combustion nucléaire via des sorties des détecteurs de combustion nucléaire de manière correspondante ;
2) faire entrer des éléments combustibles dans des entrées d'un dispositif d'alimentation ou d'un tube d'alimentation, évacuer un élément combustible via la sortie du dispositif d'alimentation à un intervalle de temps prédéterminé T, arrêter l'évacuation de l'élément combustible jusqu'à ce qu'au moins deux éléments combustibles soient évacués de telle sorte que les au moins deux éléments combustibles forment une file d'attente d'éléments combustibles à l'intérieur de la canalisation de montée, entraîner les files d'attente d'éléments combustibles jusqu'à l'organe de déviation de gaz par un écoulement de gaz généré à partir de la chambre à haute pression, renvoyer l'écoulement de gaz vers la chambre à basse pression à partir de l'organe de déviation de gaz, et faire entrer les éléments combustibles dans un coeur de réacteur via la canalisation d'alimentation de réacteur par gravité ou par inertie après un passage à travers l'organe de déviation de gaz, dans lequel l'intervalle de temps prédéterminé T est dans une plage de 0 à L/V, où L est une longueur de la canalisation de montée et V est une vitesse de déplacement de chaque élément combustible à l'intérieur de la canalisation de montée ; et
3) répéter l'étape 2) de manière à faire monter pneumatiquement, par groupe, les éléments combustibles du groupe de réacteurs à lit de boulets.
